# EUROPÄISCHE PATENTSCHRIFT

(11) **EP 2 807 714 B1**
(45) Veröffentlichungstag und Bekanntmachung des Hinweises auf die Patenterteilung: **16.05.2018**
(21) Anmeldenummer: 13702008.7
(22) Anmeldetag: 24.01.2013
(51) Int. Cl.: H02G 11/00, F16L 3/26, F16G 13/16

(54) **FÜHRUNGSEINRICHTUNG**
GUIDING DEVICE
DISPOSITIF DE GUIDAGE

(30) Priorität: 24.01.2012 DE 202012000614 U
(43) Veröffentlichungstag der Anmeldung: 03.12.2014
(73) Patentinhaber: Igus GmbH, 51127 Köln (DE)
(72) Erfinder: JAEKER, Thilo, Alexander, 53757 Sankt Augustin (DE); BARTHEN, Christian, 50733 Köln (DE)
(74) Vertreter: Lippert Stachow Patentanwälte Rechtsanwälte
(86) Internationale Anmeldenummer: PCT/EP2013/051353
(87) Internationale Veröffentlichungsnummer: WO 2013/110713

(56) Entgegenhaltungen:
- DE-A1-102006 017 740
- DE-A1-102009 033 679
- DE-U1-202009 005 547
- DE-U1-202011 100 313

## Beschreibung

Die Erfindung betrifft eine Führungseinrichtung für eine Leitung, insbesondere eine Energiekette, die umlegbar ist, derart, dass ein Abschnitt (Obertrum) derselben über einen anderen Abschnitt (Untertrum) positionierbar ist und Obertrum und Untertrum durch einen bogenförmigen Abschnitt miteinander verbunden sind. Derartige Leitungen oder Energieketten dienen der Versorgung von beweglichen Maschinen mit Energie und gegebenenfalls auch anderen Betriebsmitteln.

In Abhängigkeit von den jeweiligen Gegebenheiten können diese Führungseinrichtungen recht lang sein, so dass entsprechend hohe Aufwendungen, insbesondere für das zur Herstellung erforderliche Material entstehen.

DE 20 2009 005 547 U1 offenbart eine derartige Führungseinrichtung, die Ablageflächen und seitliche Führungsflächen aufweist und in ihrer Längsrichtung mit in Verfahrrichtung in Abständen voneinander angeordneten U-förmigen Halterungen versehen ist, an denen wenigstens über einen Teilabschnitt der Längserstreckung der Führungseinrichtung Führungsschienen angeordnet sind, welche die Abstände zwischen den U-förmigen Halterungen überbrücken und Untertrum und/oder Obertrum der Leitung bzw. Energiekette tragen und als Winkelprofile ausgebildet sind, deren einer Schenkel eine Ablagefläche bildet und deren anderer Schenkel eine seitliche Führung darstellt, wobei die Halterungen die Führungsschienen tragen. Für die Seitenwände können Kunststoffplatten in Betracht kommen. - DE 20 2011 100 313 U1 beschreibt eine Halterung zur seitlichen Befestigung einer Führungsrinne für Energieführungsketten. Dabei soll die Führungsrinne als solche auf einfache Weise am Ort des Betriebes angebracht werden können. Die aus Kunststoff bestehenden Halterungen können form- und/oder kraftschlüssig an der Führungsrinne angreifen und diese gegebenenfalls mittels Klemmung und/oder Verrastung in ihrer Betriebsposition halten. - DE 10 2009 033 679 A1offenbart eine Anordnung von Schienen und einer Schutz- und Führungsvorrichtung für Kabel oder dergleichen, bei welcher die Ablageflächen für die Führungsvorrichtung von Rollen gebildet werden, die entlang dem Längsverlauf der Führungsvorrichtung von einem Schienenpaar gehalten werden.
Der Erfindung liegt die Aufgabe zugrunde, derartige Führungseinrichtungen zu verbessern, insbesondere auch mit der Zielsetzung, diese zu vereinfachen, auch im Sinne einer einfachen Montage, der die Führungseinrichtung bildenden Teil, gegebenenfalls am Ort der Verwendung der Führungseinrichtung, und damit eine wirtschaftlichere Herstellung zu ermöglichen.
Die Lösung dieser Aufgabe lässt sich in Hinblick auf Anspruch 1 dahingehend zusammenfassen, dass die U-förmigen Halterungen mit einem Sitz für die Führungsschienen versehen sind, der eine Ausnehmung an der Innenseite des jeweiligen Flansches mit einer Tiefe aufweist, die etwa der Stärke des in dieser Ausnehmung einzusetzenden, die seitliche Führung bildenden Schenkels der Führungsschiene entspricht, wobei der an den Flansch angrenzende Abschnitt des Steges eine zum Sitz gehörende Ausnehmung mit entsprechender Tiefe zur Aufnahme des auf dem Steg lagernden Schenkels aufweist, der die Ablagefläche bildet, und die innenseitig am Flansch und oberseitig am Steg vorgesehene Ausnehmung an ihrem jeweiligen Ende einen Hinterschnitt zum formschlüssigen Einsetzen des Randbereichs des betreffenden Schenkels der Führungsschiene aufweist, und die Fixierung der Führungsschiene im Sitz durch am Flansch bzw. am-Steg angebrachte Vorsprünge erfolgt, welche den Randbereich des jeweiligen Schenkels der Führungsschiene übergreifen, so dass die Führungsschienen mittels Clipverbindungen an den Halterungen angebracht sind, und die Halterungen aus Kunststoff hergestellt sind. Weitere Ausführungsformen werden durch die abhängigen Ansprüche 2 bis 15 definiert. Die Führungseinrichtung gemäß der Erfindung zeichnet sich durch einen einfachen Aufbau aus, so dass auch aufgrund des geringen Materialaufwandes eine größere Wirtschaftlichkeit gegeben ist, selbst dann, wenn nicht korrodierende Werkstoffe verwendet werden, die im Allgemein teurer sind. So sind die Führungseinrichtung bzw. deren Komponenten aus geeigneten Kunststoffen beispielsweise unter Anwendung des Spritzgießverfahrens bzw. des Strangpressverfahrens hergestellt. Die Verwendung von Kunststoff hat außerdem den Vorteil eines geringen Gewichts.

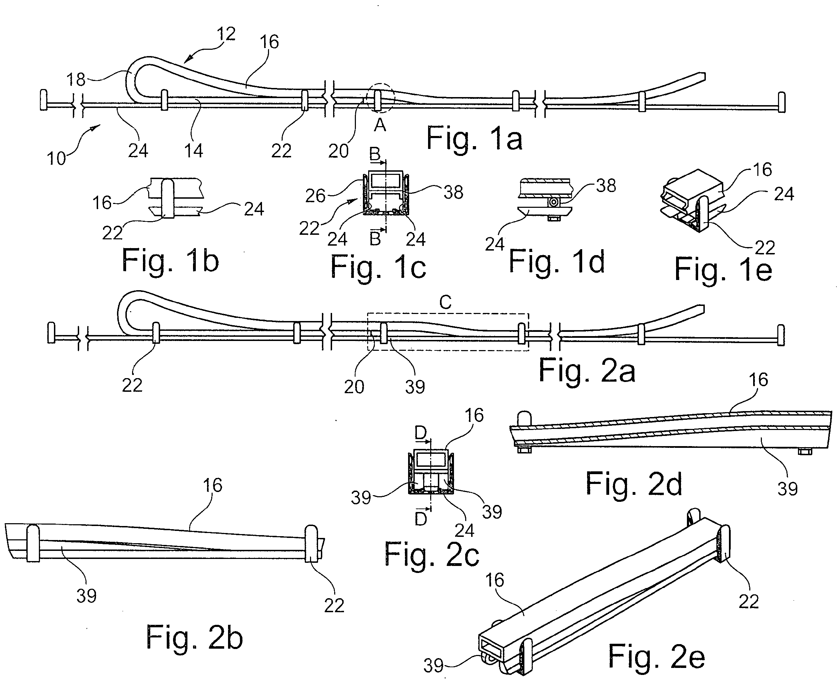

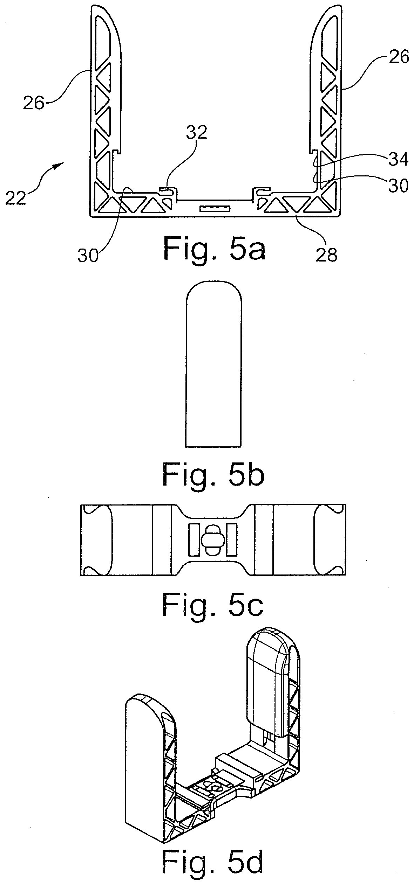

Ein weiterer Vorteil gemäß der Lehre gemäß der Erfindung besteht darin, dass die Führungseinrichtung unter Verwendung der sie bildenden Grundkomponenten variiert werden kann, um den jeweiligen Erfordernissen vor allem bezüglich der Halterung und Führung des Obertrums Rechnung zu tragen.
In der Zeichnung sind einige Ausführungsbeispiele teilweise im Schema dargestellt. Es zeigen
Figuren 1a bis 1e eine erste Ausführungsform,
Figuren 2a bis 2e eine zweite Ausführungsform,
Figuren 3a bis 3g eine dritte Ausführungsform,
Figuren 4a bis 4d eine vierte Ausführungsform,
Figuren 5a bis 5d die erste Ausführungsform einer Halterung,
Figuren 6a bis 6d die zweite Ausführungsform einer Halterung,
Figuren 7a bis 7d die dritte Ausführungsform einer Halterung,
Figuren 8a bis 8c Teildarstellungen einer vierten Ausführungsform einer Halterung.
Das in den Figuren 1a bis 1e dargestellte Ausführungsbeispiel lässt den grundsätzlichen Aufbau derselben erkennen. Die Energiekette, die für den Betrieb einer nicht dargestellten Maschine erforderlichen Leitungen aufnimmt, ist in der Führungseinrichtung 10 so angeordnet, dass in üblicher Weise zwei übereinander liegende Abschnitte vorhanden sind, von denen der untere als Untertrum 14 und der andere als Obertrum 16 bezeichnet wird. Untertrum und Obertrum sind durch einen bogenförmigen Abschnitt 18 miteinander verbunden. Das freie Ende 20 des Untertrums 14 ist in geeigneter Weise, zum Beispiel an der Führungseinrichtung, festgelegt. Das andere, nicht dargestellte Ende der Energiekette ist mit der beweglichen Maschine verbunden.
Die eigentliche Führungseinrichtung besteht aus oben offenen, U-förmigen Halterungen 22, die in Längsrichtung der Führungseinrichtung 10 in Abständen voneinander angeordnet sind. Die Halterungen 22 bestehen aus seitlichen Flanschen 26 und daran rechtwinklig angeformten Stegen 28. Die Stege 28 sind in ihren an die Flansche 26 angrenzenden Bereichen als Stegabschnitte 48 ausgebildet, die durch ein Verbindungsteil 46 lösbar miteinander verbunden sind. In einer anderen Ausführung können die Stegabschnitte auch einstückig miteinander zu einem Steg 28 verbunden sein. An diesen Halterungen 22 sind diese miteinander verbindende Führungsschienen 24 angebracht, die jeweils als Winkelprofil mit senkrecht zueinander angeordneten Schenkeln ausgebildet sind. Die Höhe der Führungsschienen 24, d.h. ihre Erstreckung längs der Flansche 26, ist geringer als die Höhe der Flansche 26 und beträgt höchstens die Hälfte der Höhe, insbesondere höchstens ein Drittel und vorzugsweise ein Viertel der Höhe der Flansche 26 gerechnet von der Oberseite des Stegs 28, wie aus Figur 5a hervorgeht. Darüber hinaus ist die Höhe der Führungsschienen 24 bevorzugt geringer als die Höhe eines Trums der Energiekette.
Für die Anbringung dieser Führungsschienen sind die U-förmigen Halterungen 22 unten an den einander zugekehrten Flächen der Flansche 26 und an den jeweils angrenzenden Bereichen des Steges 28 mit einem Sitz 30 für die Führungsschienen 24 versehen, wie dies beispielsweise die Figuren 5a und 5d erkennen lassen. Wie aus diesen Figuren hervorgeht, weist der Sitz 30 eine Ausnehmung an der Innenseite des jeweiligen Flansches 26 mit einer Tiefe auf, die etwa der Stärke des in diese Ausnehmung einzusetzenden, die seitliche Führung bildenden Schenkels der Führungsschiene entspricht. Auch der an den betreffenden Flansch 26 angrenzende Abschnitt des Stegs 28 weist eine zum Sitz 30 gehörende Ausnehmung mit entsprechender Tiefe zur Aufnahme des auf dem Steg 28 lagernden Schenkels auf, der die Ablagefläche bildet. Die innenseitig am Flansch 26 und an der Oberseite des Steges 28 vorgesehene Ausnehmung bildet an ihrem jeweiligen Ende einen Hinterschnitt zum formschlüssigen Einsetzen des Randbereichs des betreffenden Schenkels der Führungsschiene. Die Fixierung der Führungsschiene 24 im jeweiligen Sitz 30 erfolgt dann durch am Flansch 26 bzw. am Steg 28 angebrachte Vorsprünge 32, welche den Randbereich des jeweiligen Schenkels der in die Ausnehmung eingesetzten Führungsschiene übergreifen. Die Anordnung ist dabei zweckmäßiger Weise so getroffen, dass die für die Führung der Leitungen der Energiekette wirksamen Oberflächen der Führungsschienen mit den wirksamen, einander zugekehrten Oberflächen der Flansche 26 und denen des Steges bündig abschließen. Die Hinterschnitte an den Enden der Ausnehmung bzw. die Vorsprünge 32 sind so ausgebildet, dass die Führungsschiene darin bzw. dahinter einrastbar ist. Zum Beispiel kann die Winkelschiene mit dem Randbereich des am Steg anliegenden Schenkels zuerst unter den am Steg angeordneten Vorsprung 32 geschoben und anschließend durch Druck des anderen Schenkels gegen die Innenseite des Flansches 26 mit seinem Randbereich in die dortige Hinterschneidung einrasten. Zum einfacheren Einführen des Randbereichs der Führungsschiene unter dem am Steg 28 oder Flansch 26 angeordneten Vorsprung 32 ist unterhalb des Vorsprungs 32 eine Nut in der Anlagefläche des Stegs bzw. des Flansches für den betreffenden Schenkel der Führungsschiene vorgesehen.

Der jeweils am Flansch 26 befindliche Teil des Sitzes 30 für die Führungsschiene 24 ist mit einem Anschlag 34 versehen, welcher von einer Zunge 36 getragen wird, die so mit dem Flansch 26 verbunden ist, dass sie elastisch verschwenkbar ist. Bei Herstellung der Halterung 22 aus einem geeigneten Kunststoff, beispielsweise durch Spritzgießen, ist das Anformen einer solchen Zunge mit einem Anschlag ohne weiteres in einem Arbeitsgang möglich.

Die Führungseinrichtung wird in der Weise montiert, dass die Führungsschienen 24 und die Halterung 22 in der beschriebenen Weise miteinander verbunden werden, wobei sich ein Führungsschienenabschnitt in Abhängigkeit von den jeweiligen Gegebenheiten auch über mehrere Halterungen einer Führungseinrichtung erstrecken kann. In diesem Fall würde der im Sitzbereich 30 vorgesehenen Anschlag 34 beim Einsetzen der Führungsschiene einfach unter entsprechender Verformung die Zunge 36 in eine unwirksame Position verschoben werden. Im anderen Fall, wenn der Stoß zwischen zwei benachbarten Abschnitten der Führungsschiene im Bereich einer Halterung zu liegen kommt, kann der dann in seiner wirksamen, in den Figuren dargestellten Lage befindliche Anschlag das Positionieren der Führungsschiene in der Halterung erleichtern, indem deren jeweiligen Enden an dem Anschlag zur Anlage gebracht werden. Bei dem Ausführungsbeispiel gemäß den Figuren 1a bis 1e erstreckt sich die Führungseinrichtung mit den Führungsschienen 24 über den Bereich hinaus, der durch das festgelegte Ende 20 der Energiekette begrenzt ist. Dabei ist die Anordnung so getroffen, dass das Obertrum 16, welches sich von diesem festgelegten Ende in Richtung auf die zu versorgende Maschine erstreckt, so weit wie erforderlich auch durch die von Halterungen und Führungsschienen gebildete Führungseinrichtung geführt wird und dabei zumindest über Teile seiner Erstreckung zwischen den Führungsschienen 24 liegt, welche sich auf dem durch Untertrum 14 bestimmten Niveau befinden. Dazu ist es erforderlich, dass das Obertrum in dem an das festgelegte Ende des Untertrums anschließenden Bereich auf das Niveau der Führungsschienen 24, d.h. auf das des Untertrums, abgesenkt wird. Dazu können die in diesem die Absenkung bewirkenden Bereich die Halterungen 22 an ihren Flanschen 26 mit Rollen 38 versehen sein, welche die längsverlaufenden Ränder des Obertrums unterfassen und stützen und so bei entsprechender Anordnung dieser Rollen das Obertrum auf das Niveau der Führungsschienen 24 absenken, wie dies insbesondere in Figur 1a dargestellt ist.
Eine andere Möglichkeit bei sonst gleicher Ausgestaltung der Führungseinrichtung besteht darin, hinter dem Bereich 20, in welchem das Ende des Untertrums festgelegt ist, ein keilförmiges Gleitelement 39 vorzusehen, welches sich in Richtung auf die zu versorgende Maschine verjüngt, also an Höhe abnimmt, wie dies in den Figuren 2a bis 2e dargestellt ist. Figur 2c lässt erkennen, dass das Gleitelement aus zwei Keilen 38 besteht, die jeweils in einer der beiden Führungsschienen 24 eingesetzt und in geeigneter Weise befestigt sind.

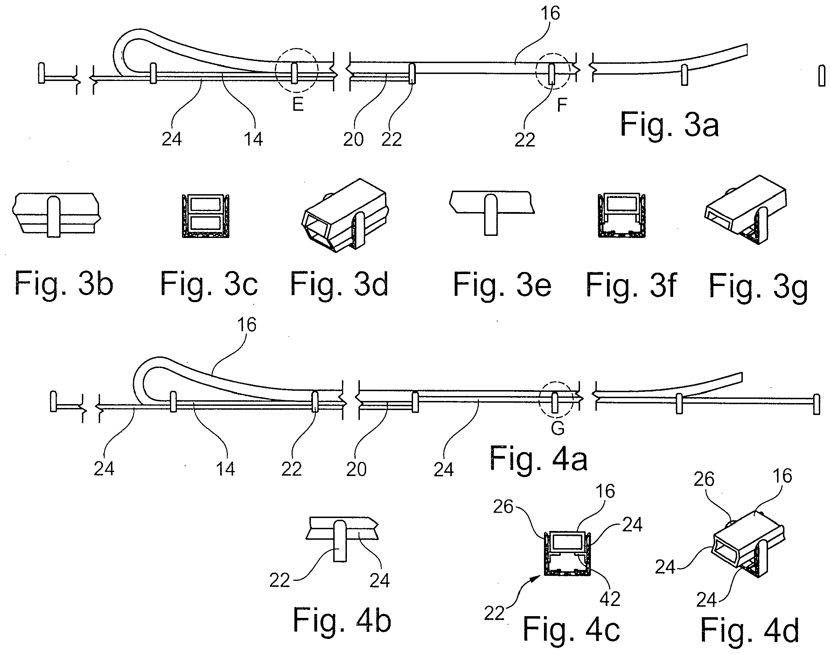

Das Ausführungsbeispiel gemäß den Figuren 3a bis 3g zeigt eine Führungseinrichtung, bei welcher die Führungsschienen 24, welche das Untertrum 14 aufnehmen, sich nur über eine geringe Wegstrecke über das festgelegte Ende 20 des Untertrums in Richtung auf die zu versorgende Maschine erstrecken, so dass das Obertrum 16 sich in diesem der zu versorgenden Maschinen zugewandten Bereich nur partiell durch die dort befindlichen U-Halterungen getragen wird, und zwar auf einem Niveau, welches oberhalb des Niveaus der Führungsschienen liegt. Einzelheiten sind in den Figuren 3b bis 3g zu entnehmen. Insbesondere die Figuren 3f und 3g zeigen, wie die beiden von den Flanschen der Halterung 22 getragenen Rollen das Obertrum seitlich an dessen Längsrändern untergreifen.

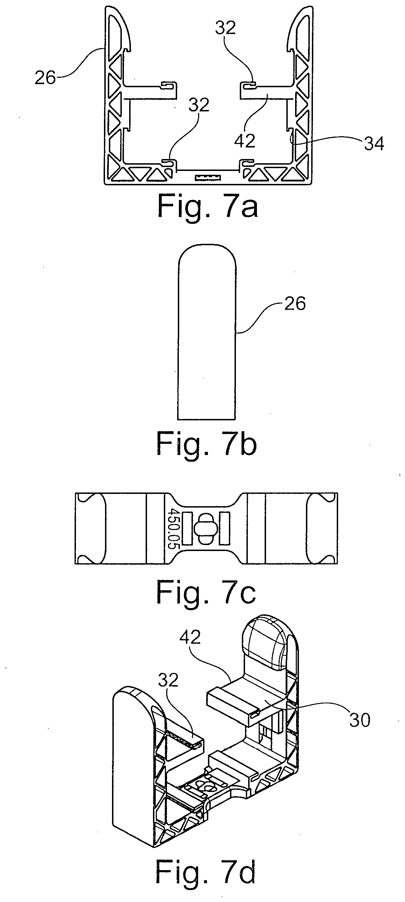

Die Ausführungsform gemäß den Figuren 4a bis 4d entspricht in wesentlichen Teilen insoweit den Ausführungsformen gemäß den Figuren 1a bis 1e und Figuren 2a bis 2e, als sich die Führungsschienen derselben weit über das festgelegte Ende 20 des Untertrums 15 in Richtung auf die zu versorgende Maschine erstrecken. Dabei ist jedoch ein Unterschied in soweit vorhanden, als etwa ab dem Ende 20 die Führungsschienen 24 höher angeordnet sind als die Führungsschienen für das Untertrum, wie dies insbesondere der Figur welches insbesondere der Figur 4c zu entnehmen ist. Das Obertrum bleibt somit etwa auf dem Höhenniveau, in welchem es sich auch dort befindet, wo es vom Untertrum getragen wird. Insbesondere Figur 4c lässt weiterhin erkennen, dass die in diesem Abschnitt befindlichen Halterungen 22 an den einander zugekehrten Seiten ihrer Flansche 26 jeweils mit einem kleinen stegartigen Fortsatz 42 versehen sind, welcher mit dem jeweils zugehörigen Flansch ebenfalls einen Sitz 30 für eine Führungsschiene 24 bildet. Figur 7a und 7d zeigen, dass diese Sitze 30 ebenfalls durch Vorsprünge 32 begrenzt sind, welche eine einfache Clipverbindung zwischen Führungsschiene und Halterung ermöglichen. Ferner können auch diese Sitze mit einem elastisch verschiebbaren Anschlag 34 versehen sein, wie er im Zusammenhang mit dem Ausführungsbeispiel gemäß Figuren 1a bis 1e beschrieben wurde.

Die Figuren 5a bis 5d zeigen eine Ausführungsform der U-förmigen Halterung 22, nämlich einen Querschnitt, eine Seitenansicht, eine Draufsicht und eine perspektivische Ansicht.

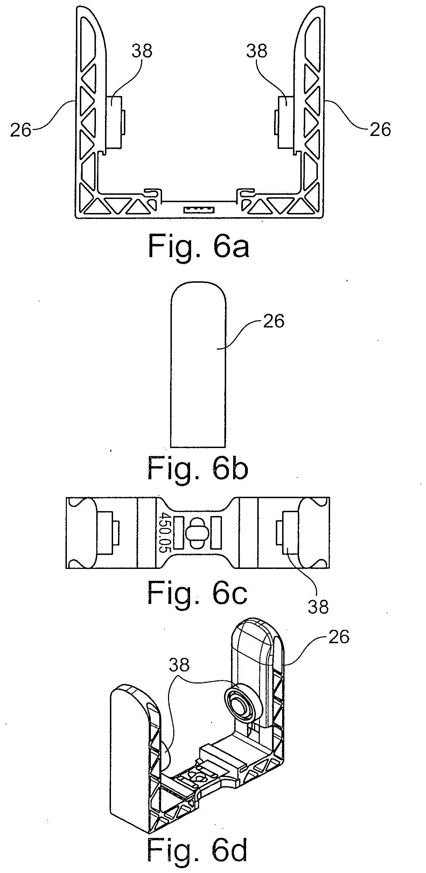

Die Figuren 6a bis 6d zeigen die Ansicht einer weiteren Ausführungsform, die sich von der der Figuren 5a bis 5d dadurch unterscheiden, dass sie an beiden Flanschen 26 an den einander zugekehrten Seiten mit Führungsrollen 38 versehen ist, die das Obertrum abstützen, sei es in dem Bereich, welchen wie in der Figur 1a das Obertrum auf das Niveau des Untertrums abgesenkt wird, sei es bei der Ausführung gemäß 3a, bei welcher das Obertrum im Wesentlichen nur die in Abständen angeordneten Halterungszonen 20, also partiell abgestützt ist.

Die Figuren 7a bis 7d zeigen in den entsprechenden Ansichten jene Ausführungsform, bei welcher die Halterungen mit zusätzlichen Stegen 42 zur Führung des Obertrums versehen ist. Hierbei tragen die Halterungen gegebenenfalls zwei Führungsschienen-Paare, die in einem vertikalen Abstand angeordnet sind.

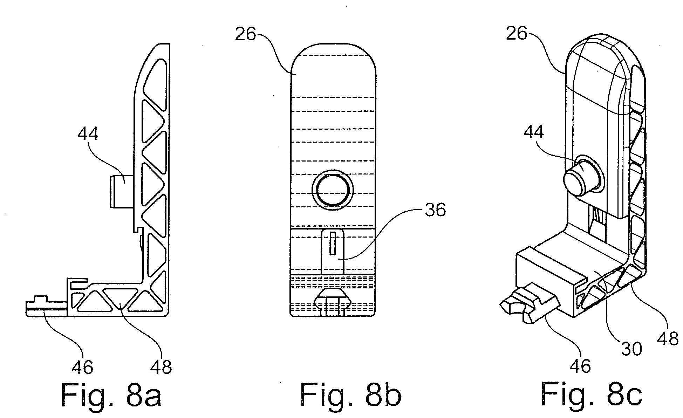

Die Figuren 8a bis 8c zeigen ein weiteres Ausführungsbeispiel, von welchem jedoch nur ein Halterungsteil mit Flansch 26 und daran vorzugsweise einstückig angebrachten Abschnitt 48 eines Steges dargestellt ist, welcher die beiden Flansche der U-förmigen Halterung verbindet und den horizontalen Teil des Sitzes 30 trägt. Zwei derartige Halterungsteile sind zu einer U-förmigen Halterung zusammensetzbar. Bei diesem Ausführungsbeispiel sind die beiden Halterungsteile durch ein nicht dargestelltes Stegteil lösbar miteinander verbunden. Das dazu vorgesehene Verbindungsteil 46 greift in eine entsprechende Ausnehmung dieses Stegteils ein, das mit einer entsprechenden Ausnehmung versehen ist, wobei die Verbindung zwischen den beiden Flanschteilen und dem Stegteil durch einen Schnappverschluss bewirkt werden kann. Es ist natürlich auch möglich, die beiden Halterungsteile so auszuführen, dass sie jeweils die Hälfte einer kompletten U-förmigen Halterung darstellen und ohne ein besonderes zwischen geschaltetes Stegteil auskommen. In jedem der beiden Fälle ist eine Ausgestaltung möglich, bei welcher die den Flansch aufweisenden Halterungsteile derart übereinstimmend ausgeführt sind, dass sie austauschbar sind, also beispielsweise auf beiden Seiten der Führungseinrichtung eingebaut werden können. Eine geteilte Ausführung der U-förmigen Halterung kann beispielsweise aus Gründen der einfacheren Herstellung bevorzugt werden, insbesondere dann, wenn die Halterung mittels Spritzgießen hergestellt werden, was sich insbesondere bei Verwendung von Kunststoff anbietet. Dadurch ließe sich auch die erforderliche Elastizität der zusammenwirkenden Verbindungsteile ohne zusätzliche Maßnahmen erreichen. Jeder Flansch 26 der Figuren 8a bis 8c ist an der dem gegenüberliegenden Flansch zugekehrten Seite mit einem zylindrischen Vorsprung 44 versehen, welcher ebenfalls der Abstützung des Obertrums dient. Sämtlichen Ausführungen der Erfindung ist gemeinsam, dass die vertikale Erstreckung der die seitliche Führung bewirkenden Schenkel der Führungsschienen 24, also deren Höhe, merklich geringer ist als die vertikale Erstreckung der Leitung oder Energiekette, wobei eine zusätzliche Führung durch die U-förmigen Halterungen 22 erfolgt. Diese Ausgestaltung trägt im Vergleich mit bekannten Führungseinrichtungen auch zu einer erheblichen Materialersparnis bei. Die Verwendung der Clipverbindungen zur Anbringung der Führungsschienen 24 an den Halterungen 22 begünstigt eine einfache Montage der die Führungseinrichtung bildenden Teile, die gegebenenfalls am Ort des Einsatzes durchgeführt werden kann.

### Bezugzeichenliste

- 10: Führungseinrichtung
- 12: Energiekette
- 14: Untertrum
- 16: Obertrum
- 18: bogenförmiger Abschnitt
- 20: Ende des Untertrums
- 22: Halterung
- 24: Führungsschiene
- 26: Flansch
- 28: Steg
- 30: Sitz
- 32: Vorsprung
- 33: Hinterschneidung
- 34: Anschlag
- 36: Zunge
- 38: Rolle
- 39: Gleitelement
- 42: stegartiger Fortsatz
- 44: zylindrischer Vorsprung
- 46: Verbindungsteil
- 48: Stegabschnitt

## Patentansprüche

1. Führungseinrichtung für eine Leitung, insbesondere Energiekette (12), die umlegbar ist, derart, dass ein oberer Abschnitt, als Obertrum (16) bezeichnet, derselben über einen anderen, unteren Abschnitt, als Untertrum (14) bezeichnet,derselben positionierbar ist und Obertrum und Untertrum durch einen bogenförmigen Abschnitt (18) miteinander verbunden sind, wobei die Führungseinrichtung Ablageflächen und seitliche Führungsflächen aufweist und in ihrer Längsrichtung mit in Verfahrrichtung in Abständen voneinander angeordneten, aus seitlichen Flanschen (26) und daran rechtwinklig angeformten Stegen (28) bestehenden U-förmigen Halterungen (22) versehen ist, und an den Halterungen wenigstens über einen Teilabschnitt der Längserstreckung der Führungseinrichtung Führungsschienen (24) angeordnet sind, welche die Abstände zwischen den U-förmigen Halterungen (22) überbrücken und Untertrum und/oder Obertrum der Leitung bzw. Energiekette tragen und als Winkelprofile ausgebildet sind, deren einer Schenkel eine Ablagefläche bildet und deren anderer Schenkel eine seitliche Führung darstellt, **dadurch gekennzeichnet, dass** die U-förmigen Halterungen (22) mit einem Sitz (30) für die Führungschienen (22) versehen sind, der eine Ausnehmung an der Innenseite des jeweiligen Flansches (26) mit einer Tiefe aufweist, die etwa der Stärke des in dieser Ausnehnung einzusetzenden, die seitliche Führung bildenden Schenkels der Führungsschiene entspricht, wobei der an den Flansch (26) angrenzende Abschnitt des Steges (28) eine zum Sitz (30) gehörende Ausnehmung mit entsprechender Tiefe zur Aufnahme des auf dem Steg lagernden Schenkels aufweist, der die Ablagefläche bildet, und die innenseitig am Flansch (26) und oberseitig am Steg (28) vorgesehene Ausnehmung an ihrem jeweiligen Ende einen Hinterschnitt (33) zum formschlüssigen Einsetzen des Randbereichs des betreffenden Schenkels der Führungsschiene aufweist, und die Fixierung der Führungsschiene im Sitz (30) durch am Flansch (26) bzw. am Steg (28) angebrachte Vorsprünge (32) erfolgt, welche den Randbereich des jeweiligen Schenkels der Führungsschiene übergreifen, sodass die Führungsschienen (24) mittels Clipverbindungen an den Halterungen (22) angebracht sind, und die Halterungen (22) aus Kunststoff hergestellt sind.

2. Führungseinrichtung nach Anspruch 1, **dadurch gekennzeichnet, dass** die Führungsschienen aus Kunststoff hergestellt sind.

3. Führungseinrichtung nach Anspruch 1, **dadurch gekennzeichnet, dass** die ein Führungsschienenpaar bildenden Führungsschienen (24) an den Halterungen (22) auf der Höhe des Untertrums angeordnet sind.

4. Führungseinrichtung nach einem der vorhergehenden Ansprüche, **dadurch gekennzeichnet, dass** die Halterung (22) an ihrer Aufnahme (30) für die Führungsschiene (24) mit einem Anschlag (34) versehen ist, welcher zwischen einer Position, in welcher er in den Bereich der Aufnahme für die Führungsschiene hineinragt, und einer unwirksamen Position bewegbar ist.

5. Führungseinrichtung nach einem der vorhergehenden Ansprüche, **dadurch gekennzeichnet, dass** die Halterung (22) mit Mitteln für die Führung des Obertrums (16) versehen ist.

6. Führungseinrichtung nach einem der vorhergehenden Ansprüche, **dadurch gekennzeichnet, dass** in dem Abschnitt derselben, welcher an dem Bereich (20) anschließt, in welchem das Untertrum (14) fixiert ist, Führungsmittel (38, 39) vorgesehen sind, um das Obertrum während der Fahrbewegungen aus einer Position oberhalb des Untertrums in den Wirkungsbereich der beiden auf dem Niveau und des Untertrums befindlichen Führungsschienen (24) zu bringen.

7. Führungseinrichtung nach Anspruch 6, **dadurch gek ennzeichnet,** dass dieses Führungsmittel als vorzugsweise keilförmiger Gleitkörper (39) ausgebildet ist.

8. Führungseinrichtung nach einem der vorhergehenden Ansprüche, **dadurch gekennzeichnet, dass** die Mittel zur Führung des Obertrums als an den Flanschen der Halterung angebrachte Rollen (38) ausgebildet sind.

9. Führungseinrichtung nach einem der vorhergehenden Ansprüche, **dadurch gekennzeichnet, dass** die Halterungen an ihren einander zugekehrten Seiten der Flanschen mit stegartigen Fortsätzen (42) versehen sind.

10. Führungseinrichtung nach einem der vorhergehenden Ansprüche, **dadurch gekennzeichnet, dass** das Obertrum (16) in einem Teilabschnitt der Längserstreckung der Führungseinrichtung, in welchem sich kein Untertrum befindet, nur partiell durch Halterungen (22) geführt ist.

11. Führungseinrichtung nach einem der vorhergehenden Ansprüche, **dadurch gekennzeichnet, dass** die Halterungen mit Führungsschienen (24) versehen sind, welche der Führung des Obertrums (16) dienen.

12. Führungseinrichtung nach Anspruch 10, **dadurch ge kennzeichnet,** dass die Führungsschienen (24) oberhalb des Niveaus angeordnet sind, in welchem sich die Führungsschienen (24) für das Untertrum (14) befinden.

13. Führungseinrichtung nach einem der vorhergehenden Ansprüche, **dadurch gekennzeichnet, dass** die Halterung (22) mehrteilig ausgebildet ist, derart dass die beiden Flansche (26) der U-förmigen Halterung (22) durch einen separaten Stegabschnitt miteinander lösbar verbunden sind.

14. Führungseinrichtung nach einem der vorhergehenden Ansprüche, **dadurch gekennzeichnet, dass** die Halterung (22) zweiteilig ausgebildet ist, derart, dass sich zwei L-förmige Teile ergeben, die im Stegbereich, gegebenenfalls unter Zwischenschaltung eines zusätzlichen Stegabschnittes, miteinander verbindbar sind.

15. Führungseinrichtung nach einem der vorhergehenden Ansprüche, **dadurch gekennzeichnet, dass** der Sitz (30) für die Führungsschiene (24) mit einem Anschlag (34) versehen ist, welcher zwischen einer wirksamen Position, in welcher er in den Sitzbereich (30) hineinragt, und einer unwirksamen Position elastisch bewegbar ist.

## Claims

1. A guide device for a line, in particular a power chain (12) which can be turned over in such a way that a portion referred to as upper run (16) thereof can be positioned over another portion referred to as lower run (14) thereof and the upper run and the lower run are connected together by an arcuate portion (18), wherein the guide device has support surfaces and lateral guide surfaces and is provided in the longitudinal direction thereof with U-shaped holders (22) arranged at spacings from each in the direction of displacement and consisting of lateral flanges (26) and legs (28) molded at right angles to said flanges and mounted to the holders at least over a portion of the longitudinal extent of the guide device are guide rails which bridge over the spacings between the holders and carry the lower run and/or upper run of the line or power chain and are in the form of angle profiles of which one limb forms the support surface and the other limb represents the lateral guide means, **characterised in that** the U-shaped holders (22) are provided with a seat (30) for the guide rails (22) which has a recess on the inner face of the respective flange (26) with a depth which approximately corresponds to the thickness of the limb of the guide rail to be inserted into this recess and forming the lateral guide means, wherein the part of the leg (28) adjacent the flange (26) has a recess belonging to the seat (30) with a corresponding depth for receiving the limb supported on the leg which forms the support surface, and wherein the recess provided on the inside of the flange (26) and on the upper side of the leg (28) has on the respective end thereof an undercut (33) for the form-flitting insertion of the rim portion of the corresponding limb of the guide rail, and wherein fixing of the guide rail to the seat (30) takes place by projections (32) formed on the flange (26) or on the leg (28) and overlapping the rim portion of the respective limb of the guide rail so that the guide rails (24) are mounted to the holders (22) by means of clip connections and wherein the holders (22) are made of plastic.

2. A guide device as set forth in claim 1 **characterised in that** the guide rails are made of plastic.

3. A guide device as set forth in claim 1 **characterised in that** the guide rails (24) forming a pair of guide rails are arranged on the holders (22) at the height of the lower run.

4. A guide device as set forth in one of the preceding claims **characterised in that** the holder (22) is provided at its receiving means (30) for the guide rail (24) with an abutment (34) moveable between a position in which it projects into the region of the receiving means for the guide rail and an inoperative position.

5. A guide device as set forth in one of the preceding claims **characterised in that** the holder (22) is provided with means for guiding the upper run (16).

6. A guide device as set forth in one of the preceding claims **characterised in that** provided in the portion thereof, adjoining the region (20) in which the lower run (14) is fixed are guide means (38, 39) for moving the upper run during the displacement movements out of a position above the lower run into the operative region of the two guide rails (24) disposed at the level of the lower run.

7. A guide device as set forth in claim 6, **characterized in** said guide means is in the form of a preferably wedge-shaped sliding body (39).

8. A guide device as set forth in one of the preceding claims, **characterized in that** the means for guiding the upper run are in the form of rollers (38) mounted to the flanges of the holder.

9. A guide device as set forth in one of the preceding claims, **characterised in that** at their mutually facing sides of the flanges the holders are provided with leg-like extensions (42).

10. A guide device as set forth in one of the preceding claims, **characterised in that** the upper run (16) is only partially guided by holders (22) in a portion of the longitudinal extent of the guide device, in which there is no lower run.

11. A guide device as set forth in one of the preceding claims **characterised in that** the holders are provided with guide rails (24) serving to guide the upper run (16).

12. A guide device as set forth in claim 10 **characterised in that** the guide rails (24) are arranged above the level at which the guide rails (24) for the lower run (14) are disposed.

13. A guide device as set forth in one of the preceding claims **characterised in that** the holder (22) is of a multi-part configuration such that the two flanges (26) of the U-shaped holder (22) are releasably connected together by a separate leg portion.

14. A guide device as set forth in one of the preceding claims **characterised in that** the holder (22) is of a two-part configuration such that there are two L-shaped parts which can be releasably connected together in the leg region, optionally with the interposition of an addition leg portion.

15. A guide device as set forth in one of the preceding claims **characterised in that** the seat (30) for the guide rail (24) is provided with an abutment (34) elastically moveable between an operative position in which it projects into the seat region (30) and an inoperative position.

## Revendications

1. Dispositif de guidage pour une conduite, en particulier une chaîne de transmission d'énergie (12), qui peut être déplacée de telle manière qu'une partie supérieure, dénommée brin supérieur (16), de celle-ci puisse être positionnée par-dessus une autre partie, dénommée brin inférieur (14), et que le brin supérieur et le brin inférieur soient reliés entre eux par une partie en arc de cercle (18), lequel dispositif de guidage présente des surfaces de pose et des surfaces de guidage latérales et est muni, dans sa direction longitudinale, de fixations (22) en forme de U constituées par des brides latérales (26) et des barrettes (28) perpendiculairement façonnées sur celles-ci et disposées à distance les unes des autres dans le sens de déplacement, et des rails de guidage (24) sont montés sur les fixations au moins sur une partie de l'étendue en longueur du dispositif de guidage, lesquels franchissent les distances entre les fixations (22) en forme de U et portent le brin inférieur et/ou le brin supérieur de la conduite ou de la chaîne de transmission d'énergie et lesquels sont conformés comme de profilés de cornière dont une aile forme la surface d'appui et l'autre aile le guidage latéral, **caractérisé en ce que** les fixations (22) en forme de U sont munies d'une assise (30) pour les rails de guidage (22) qui présente un évidemment sur la face intérieure de la bride (26) respective avec une profondeur qui correspond à peu près à l'épaisseur de l'aile du rail de guidage à insérer dans cet évidemment et formant le guide latéral, la partie de la barrette (28) adjacente à la bride (26) présente une évidemment appartenant à l'assise (30) avec une profondeur correspondante pour recevoir l'aile reposant sur la barrette et formant la surface de pose, et ladite évidemment prévue côté intérieur de la bride (26) et sur le côté supérieur de la barrette (28) présente à son extrémité respective une contre-dépouille (33) pour l'insertion par engagement positif de la partie périphérique de l'aile respective, et la fixation du rail de guidage dans l'assise (30) est effectuée par des saillies (32) montées sur la bride (26) ou sur la barrette (28) et chevauchant la partie périphérique de l'aile respective du rail de guidage de manière que les rails de guidage (24) soient montés au moyen d'assemblages clipsés sur les fixations (22), et les fixations (22) sont faits de plastique.

2. Dispositif de guidage selon la revendication 1, **caractérisé en ce que** les rails de guidage (24) sont faits de plastique.

3. Dispositif de guidage selon la revendication 1, **caractérisé en ce que** les rails de guidage (24) formant une paire de rails de guidage sont disposés sur les fixations (22) à la hauteur du brin inférieur.

4. Dispositif de guidage selon l'une des revendications précédentes, **caractérisé en ce que** la fixation (22) est munie sur son logement (30) pour le rail de guidage (24) d'une butée (34) qui peut être déplacée entre une position dans laquelle elle dépasse au niveau du logement pour le rail de guidage et une position inactive.

5. Dispositif de guidage selon l'une des revendications précédentes, **caractérisé en ce que** la fixation (22) est munie de moyens pour le guidage du brin supérieur (16).

6. Dispositif de guidage selon l'une des revendications précédentes, **caractérisé en ce que** dans sa section qui se raccorde à la zone (20) dans laquelle le brin inférieur (14) est fixé, des moyens de guidage (38, 39) sont prévus pour amener le brin supérieur, pendant les mouvements de déplacement, d'une position située au-dessus du brin inférieur à la zone d'action des deux rails de guidage (24) qui se trouvent au niveau du brin inférieur.

7. Dispositif de guidage selon la revendication 6, **caractérisé en ce que** ce moyen de guidage est conformé comme un élément coulissant (39), de préférence en forme de coin.

8. Dispositif de guidage selon l'une des revendications précédentes, **caractérisé en ce que** les moyens de guidage du brin supérieur sont formés de galets (38) disposés sur les brides de la fixation.

9. Dispositif de guidage selon l'une des revendications précédentes, **caractérisé en ce que** les fixations sont munies, sur les côtés de leurs brides qui se font face, de saillies (42) en forme de barrettes.

10. Dispositif de guidage selon l'une des revendications précédentes, **caractérisé en ce que** le brin supérieur (16) n'est que partiellement guidé par des fixations (22) sur une partie de l'étendue en longueur du dispositif de guidage dans laquelle il n'y a pas de brin inférieur.

11. Dispositif de guidage selon l'une des revendications précédentes, **caractérisé en ce que** les fixations sont munies de rails de guidage (24) qui servent à guider le brin supérieur (16).

12. Dispositif de guidage selon la revendication 10, **caractérisé en ce que** les rails de guidage (24) sont disposés au-dessus du niveau auquel se trouvent les rails de guidage (24) pour le brin inférieur (14).

13. Dispositif de guidage selon l'une des revendications précédentes, **caractérisé en ce que** la fixation (22) est conçue en plusieurs parties, de telle manière que les deux brides (26) de la fixation (22) en forme de U soient reliées entre elles de façon amovible par une partie formant barrette séparée.

14. Dispositif de guidage selon l'une des revendications précédentes, **caractérisé en ce que** la fixation (22) est conçue en deux parties, de façon à former deux parties en forme de L qui peuvent être reliées entre elles au niveau de la barrette, en intercalant éventuellement une partie formant barrette supplémentaire.

15. Dispositif de guidage selon l'une des revendications précédentes, **caractérisé en ce que** l'assise (30) pour le rail de guidage (24) est munie d'une butée (34) qui peut se déplacer de façon élastique entre une position active dans laquelle elle dépasse dans la zone de l'assise (30) et une position inactive.
